# EUROPÄISCHE PATENTSCHRIFT

(11) **EP 3 536 652 B1**
(45) Veröffentlichungstag und Bekanntmachung des Hinweises auf die Patenterteilung: **21.12.2022**
(21) Anmeldenummer: 19159164.3
(22) Anmeldetag: 25.02.2019
(51) Int. Cl.: B66F 9/06, B66F 9/24, G05D 1/02

(54) **STEUERUNG VON WENIGSTENS ZWEI FAHRBAREN FLURFÖRDERZEUGEN IN EINER WARENLOGISTIKEINRICHTUNG**
CONTROL OF AT LEAST TWO MOVABLE INDUSTRIAL TRUCKS IN A GOODS LOGISTICS FACILITY
COMMANDE D'AU MOINS DEUX CHARIOTS DE MANUTENTION MOBILES DANS UN DISPOSITIF DE LOGISTIQUE DES MARCHANDISES

(30) Priorität: 05.03.2018 DE 102018104984
(43) Veröffentlichungstag der Anmeldung: 11.09.2019
(73) Patentinhaber: Jungheinrich Aktiengesellschaft, 22047 Hamburg (DE)
(72) Erfinder: Grabbe, Florian, 22335 Hamburg (DE); Ahrens, Stefan, 25373 Ellerhoop (DE); Heise, Sven-Ole, 24783 Osterrönfeld (DE); Kopelke, Jan, 22337 Hamburg (DE); Altmann, Tony, 24616 Brokstedt (DE)
(74) Vertreter: Seemann & Partner Patentanwälte mbB

(56) Entgegenhaltungen:
- EP-A1- 2 886 507
- US-A1- 2011 010 023
- US-A1- 2012 046 809
- US-A1- 2013 190 963

## Beschreibung

Die Erfindung betrifft ein Verfahren zum Steuern von wenigstens zwei fahrbaren Flurförderzeugen in einem Bereich einer Warenlogistikeinrichtung. Ferner betrifft die Erfindung ein Flurförderfahrzeugsteuersystem einer Warenlogistikeinrichtung mit wenigstens zwei fahrbaren Flurförderzeugen der Warenlogistikeinrichtung.

Im Stand der Technik ist bekannt, dass Flurförderzeuge in Logistikeinrichtungen, wie zum Beispiel Warenlagern oder Regallagern für Güter und Waren, mit möglichst hoher Geschwindigkeit bewegt werden, um die Güter und Waren auf schnelle sowie effiziente Weise von bzw. zu ihren Lagerstellen zu transportieren. In der Regel werden hierbei verschiedene Flurförderzeuge eingesetzt, die vom Bedienpersonal bzw. von einem Fahrer oder automatisch, zum Beispiel durch Verwendung von Induktionsschleifen oder dergleichen, geführt werden.

Um beispielsweise einen Fahrer eines Flurförderzeugs bei der Handhabung des Flurförderzeugs zu unterstützen, ist in EP 1 767 488 A2 ein System zur Unterstützung eines Fahrers eines Flurförderzeugs während der Fahrt offenbart. Ferner ist aus DE 10 2010 005 034 A1 ein Verfahren zur Bewirtschaftung eines Lagers mit einem Flurförderzeug beschrieben.

In US 2012/0046809 A1 sind ein Flottenverwaltungssystem sowie ein Verfahren zur drahtlosen Interaktion mit einem Materialtransportfahrzeug beschrieben. Hierdurch wird ein positionsabhängiger Betrieb der Materialtransportfahrzeuge, wie zum Beispiel von mehreren Gabelstaplern, ermöglicht. US 2012/0046809 A1 offenbart ein Verfahren gemäß dem Oberbegriff des unabhängigen Anspruchs 1.

Außerdem offenbart US 2011/0010023 A1 ein Verfahren und eine Vorrichtung zum Verwalten von bemannten und automatisierten Nutzfahrzeugen, wie zum Beispiel Flurförderzeuge, und zum Aufnehmen und Liefern von Objekten durch automatisierte Fahrzeuge.

Des Weiteren ist in EP 2 886 507 A1 ein Fahrzeuginformationssystem für mehrere Flurförderzeuge gezeigt, wobei Flurförderzeuge Daten mit einem Lagercomputersystem einer Logistikeinrichtung austauschen.

Darüber hinaus ist in US 2013/0190963 A1 ist ein Verwaltungssystem für Fahrzeugflotten beschrieben, wobei beispielsweise Flurförderzeuge über ein drahtloses Netzwerk mit einem zentralen Computer einer Logistikeinrichtung kommunizieren, der mit einer entfernten Datenbank verbunden ist.

Um die Flurförderzeuge zu führen, werden auch Fahrerassistenzsysteme auf oder in den Flurförderzeugen eingesetzt, wodurch das Flurförderzeug beeinflusst wird oder der Fahrer informiert wird, wenn beispielsweise in einem gefährdeten Bereich langsamer gefahren werden soll oder auf bestimmten Flächen oder in bestimmten Bereichen keine Ware abgelegt werden soll. Derartige Einschränkungen in der Führung der Flurförderzeuge sind jeweils lokal begrenzt und betreffen dementsprechend nur einzelne Zonen innerhalb einer Warenlogistikeinrichtung.

Die Aufgabe der Erfindung besteht darin, die Handhabung von mehreren Flurförderzeugen in einer Warenlogistikeinrichtung effektiver zu gestalten.

Gelöst wird diese Aufgabe durch ein Verfahren zum Steuern von wenigstens zwei fahrbaren Flurförderzeugen in einem Bereich einer Warenlogistikeinrichtung, wobei die Flurförderzeuge jeweils eine Flurförderzeug-Fahrsteuereinrichtung zum Steuern der Fahrbewegungen des jeweiligen Flurförderzeugs aufweisen, wobei die Flurförderzeug-Fahrsteuereinrichtungen jeweils, vorzugsweise drahtlos, mit einer, insbesondere zentralen und/oder stationären, Steuervorrichtung der Warenlogistikeinrichtung verbunden sind oder werden, wobei von der Steuervorrichtung der Warenlogistikeinrichtung individuelle Fahrbewegungssteuerbefehle und individuelle Flurförderzeugkennzeichnungen an die Fahrsteuereinrichtung der jeweiligen Flurförderzeuge übermittelt werden, so dass in einem lokalen Gebiet des Bereichs der Warenlogistikeinrichtung, in dem die Flurförderzeuge gleichzeitig bewegt, vorzugsweise gefahren, werden, die Flurförderzeuge in Abhängigkeit der individuellen Fahrbewegungssteuerbefehle und in Abhängigkeit der individuellen Flurförderzeugkennzeichnungen auf unterschiedliche Weise bewegt, insbesondere gefahren, werden oder bewegbar, insbesondere fahrbar, sind, wobei die Flurförderzeuge mittels der individuellen Fahrbewegungssteuerbefehle und mittels der individuellen Flurförderzeugkennzeichnungen mit unterschiedlichen Priorisierungskennzeichnungen versehen werden, so dass das mit einer höheren Priorisierungskennzeichnung versehene Flurförderzeug gegenüber einem mit einer niedrigeren Priorisierungskennzeichnung versehene Flurförderzeug zuerst in dem lokalen Gebiet bewegt, insbesondere gefahren, wird oder bewegbar, insbesondere fahrbar, ist.

Die Erfindung beruht auf dem Gedanken, dass die Flurförderzeug-Fahrsteuereinrichtungen, zum Beispiel die On-Board-Assistenzsysteme des Flurförderzeugs, mit der Steuervorrichtung der Warenlogistikeinrichtung verbunden werden, wodurch die Flurförderzeug-Fahrsteuereinrichtungen in die Lage versetzt werden, aufgrund der empfangenen Fahrbewegungssteuerbefehle und/oder Flurförderzeugkennzeichnungen für ihren Förderweg intelligente und effiziente Entscheidungen zu treffen, da beispielsweise von der Steuervorrichtung der Warenlogistikeinrichtung für die Fahrbewegungssteuerbefehle und/oder Flurförderzeugkennzeichnungen wichtige Daten oder Informationen über das zu fördernde oder geförderte Warengut berücksichtigt werden.

Wenn beispielsweise ein Warengut gefördert werden soll, das besonders fragil oder schwer ist, wird diese Information an eine Flurförderzeug-Fahrsteuereinrichtung eines Flurförderzeugs übermittelt, wodurch die Fahrsteuereinrichtung des Flurförderzeugs erkennt, dass das Flurförderzeug nicht mit hohen Geschwindigkeiten durch die Warenlogistikeinrichtung gefahren werden darf. Darüber hinaus kann von der Steuervorrichtung der Warenlogistikeinrichtung zusätzlich oder alternativ die für den Transport des fragilen oder schweren Warenguts vorgesehene Höchstgeschwindigkeit an die entsprechende Flurförderzeug-Fahrsteuereinrichtung des für den Transport vorgesehenen Flurförderzeugs übermittelt werden.

Darüber hinaus kann in einer weiteren Ausgestaltung des Verfahrens vorgesehen sein, dass von der Steuervorrichtung der Warenlogistikeinrichtung an die verschiedenen Flurförderzeug-Fahrsteuereinrichtungen Flurförderzeugkennzeichnungen, wie zum Beispiel Priorisierungen, oder den Priorisierungen entsprechende individuelle Fahrbewegungssteuerbefehle übermittelt werden, wodurch es möglich ist, den Flurförderzeug-Fahrsteuereinrichtungen entsprechende individuelle Steuerbefehle für die jeweiligen Flurförderzeuge zu übersenden, wodurch eine vorzugsweise temporäre Reihenfolge der eingesetzten Flurförderzeuge oder der sich im Einsatz befindlichen Flurförderzeuge erreicht wird. Dadurch können beispielsweise Flurförderzeuge mit einem Auftrag von hoher Wichtigkeit oder Eilbedürftigkeit an einer Engstelle innerhalb des Bereichs der Warenlogistikeinrichtung gegenüber Flurförderzeugen mit einem Auftrag geringerer Wichtigkeit Vorfahrt erhalten. Um zum Beispiel die Vorfahrt für das Flurförderzeug mit der höheren Priorität an der Engstelle zu realisieren bzw. zu gewährleisten, werden beispielsweise von der Steuervorrichtung der Warenlogistikeinrichtung entsprechende Fahrbewegungssteuerbefehle an die Flurförderzeug-Fahrsteuereinrichtungen der Flurförderzeuge übermittelt, wodurch beispielsweise ein Flurförderzeug mit einer niedrigeren Priorität, vorzugsweise automatisch, im Bereich der Engstelle und/oder im Bereich der Warenlogistikeinrichtung abgebremst und/oder langsamer gefahren wird.

Darüber hinaus ist es möglich, dass von der Steuervorrichtung der Warenlogistikeinrichtung auch beispielsweise Daten über die Art der zu transportierenden Waren, wie zum Beispiel Größe, Gewicht etc. oder entsprechende Steuerbefehle in Abhängigkeit der Daten über die zu transportierenden Waren, an die Fahrsteuereinrichtungen der Flurförderzeuge übermittelt werden.

Durch das erfindungsgemäße Verfahren wird es möglich, gleichzeitig mehrere Flurförderzeuge im Bereich einer Warenlogistikeinrichtung, wie zum Beispiel einem Warenlager, Regallager oder dergleichen, zu betreiben, wobei unter Berücksichtigung der mit den jeweiligen Flurförderzeugen zu transportierenden oder transportierten Warengüter und unter Berücksichtigung der entsprechenden Informationen bzw. Daten der zu transportierenden oder transportierten Warengüter ein effizienter Betrieb der Flurförderzeuge in der Warenlogistikeinrichtung erreicht wird, da dadurch sichergestellt wird, dass beispielsweise von einem Flurförderzeug Waren für einen wichtigen Auftrag besonders schnell von einer Lagerstelle zu einer Abgabestelle gefördert werden, da zum Beispiel die zulässigen Höchstgeschwindigkeiten für die anderen Flurförderzeuge mit Aufträgen von geringerer Wichtigkeit durch die Steuereinrichtung der Warenlogistikeinrichtung beschränkt werden und/oder das jeweilige Flurförderzeug mit dem wichtigen und eiligen Auftrag für eine vorbestimmte Zeitdauer mit einer höheren Priorität und gegenüber den anderen Flurförderzeugen vorrangig betrieben werden kann.

Dadurch, dass die Flurförderzeuge mittels der individuellen Fahrbewegungssteuerbefehle und mittels der individuellen Flurförderzeugkennzeichnungen mit unterschiedlichen Priorisierungskennzeichnungen versehen werden, so dass das mit einer höheren Priorisierungskennzeichnung versehene Flurförderzeug gegenüber einem mit einer niedrigeren Priorisierungskennzeichnung versehene Flurförderzeug zuerst in dem lokalen Gebiet bewegt, insbesondere gefahren, wird oder bewegbar, insbesondere fahrbar, ist, wird eine Reihenfolge in der Abarbeitung der Förderaufträge innerhalb der Warenlogistikeinrichtung verknüpft mit einer Rangfolge der Flurförderzeuge innerhalb der Priorisierungen. Das lokale Gebiet ist hierbei ein Unterbereich oder Teilbereich des gesamten Bereichs der Warenlogistikeinrichtung, wobei in dem lokalen Gebiet bzw. Teilgebiet des gesamten Bereichs wenigstens zwei Flurförderzeuge bewegt werden oder bewegbar sind.

Dazu ist gemäß einer Weiterbildung des Verfahrens vorteilhafterweise vorgesehen, dass an einer Engstelle im lokalen Gebiet, in dem die Flurförderzeuge gleichzeitig bewegt werden, das Flurförderzeug mit einer höheren Priorisierungskennzeichnung gegenüber einem Flurförderzeug mit einer niedrigeren Priorisierungskennzeichnung vorrangig bewegt wird oder bewegbar ist.

Darüber hinaus ist bei dem Verfahren in einer Weiterbildung vorgesehen, dass die individuellen Fahrbewegungssteuerbefehle und/ oder die individuellen Flurförderzeugkennzeichnungen mittels einer Anzeigeeinheit der Flurförderzeuge angezeigt werden. Dadurch werden beispielsweise einem Fahrer des Flurförderzeugs wichtige Informationen, beispielsweise über das geförderte Warengut oder über die maximale Höchstgeschwindigkeit des Flurförderzeugs und/ oder über eine für das Flurförderzeug bessere und/oder zeitlich kürzere Zeitdauer für die Fahrstrecke mittels eines Monitors oder dergleichen, angezeigt.

Außerdem ist es bei einer Weiterbildung des Verfahrens vorteilhaft, dass die individuellen Fahrbewegungssteuerbefehle und/oder die individuellen Flurförderzeugkennzeichnungen nach der Übermittlung an die Flurförderzeug-Fahrsteuereinrichtungen nach einer vorbestimmten Zeitdauer gelöscht werden. Dadurch werden beispielsweise Flurförderzeuge mit wichtigen Aufträgen nur für den Zeitraum mit einer höheren Priorisierung gegenüber den anderen Flurförderzeugen versehen. Nach Auslieferung der Ware an der Abgabestelle ist es möglich, dass die individuellen Fahrbewegungssteuerbefehle und/oder die individuellen Flurförderzeugkennzeichnungen, vorzugsweise automatisch, gelöscht werden.

Des Weiteren ist es bei dem Verfahren bevorzugt, dass ein Flurförderzeug in Abhängigkeit eines individuellen Fahrbewegungssteuerbefehls und/oder in Abhängigkeit einer individuellen Flurförderzeugkennzeichnung während seiner Fahrt, vorzugsweise für eine vorbestimmte Zeitdauer, abgebremst wird.

Weiterhin werden vorzugsweise die individuellen Fahrbewegungssteuerbefehle und/oder die individuellen Flurförderzeugkennzeichnungen für ein Flurförderzeug unter Berücksichtigung der Fähigkeiten eines Fahrzeugführers für das jeweilige Flurförderzeug von der Steuereinrichtung der Warenlogistikeinrichtung erstellt. Dadurch ist es beispielsweise möglich, dass in oder von der Steuervorrichtung der Warenlogistikeinrichtung die Fahrqualifikationen und/oder die Fahrfähigkeiten und/oder die Berufserfahrung eines Fahrzeugführers erfasst werden, so dass unter Berücksichtigung der Fähigkeiten des Flurförderzeugführers oder -fahrers entsprechende Fahrbewegungssteuerbefehle und/oder Flurförderzeugkennzeichnungen an die Flurförderzeug-Fahrsteuereinrichtung des Flurförderzeugs übermittelt werden, das der Flurförderzeugfahrer bedient. Beispielsweise wird einem Flurförderzeug von der zentralen Steuervorrichtung der Warenlogistikeinrichtung als Fahrbewegungssteuerbefehl eine höhere Maximalgeschwindigkeit übermittelt, so dass das Flurförderzeug von dem Fahrzeugführer schneller bewegt werden kann im Vergleich zu einem Flurförderzeug, das von einem Fahrzeugführer mit geringen Kenntnissen und/oder Fähigkeiten und/oder weniger Berufserfahrung etc. geführt bzw. gefahren wird. Hierdurch werden von der Steuereinrichtung der Warenlogistikeinrichtung einem Flurförderzeug mit einem Fahrer mit langjähriger Erfahrung höhere Geschwindigkeiten erlaubt.

Außerdem ist es bei einer Weiterbildung des Verfahrens vorgesehen, dass die individuellen Fahrbewegungssteuerbefehle und/oder die individuellen Flurförderzeugkennzeichnungen für ein Flurförderzeug unter Berücksichtigung der Dringlichkeit eines Förderauftrags und/oder unter Berücksichtigung der Einsatzzeit des Flurförderzeugs von der Steuereinrichtung der Warenlogistikeinrichtung erstellt werden. Hierdurch ist es beispielsweise möglich, dass in Zeiträumen, in denen ein Schichtwechsel des Personals in der Warenlogistikeinrichtung stattfindet, die Flurförderzeuge grundsätzlich mit einer niedrigeren Maximalgeschwindigkeit gefahren werden dürfen, um aufgrund der höheren Anzahl von Personen in der Warenlogistikeinrichtung diese Personen nicht zu gefährden. Hierbei werden die Fahrbewegungssteuerbefehle von der Steuereinrichtung der Warenlogistikeinrichtung für einen vorbestimmten Zeitraum bzw. eine vorbestimmte Zeitdauer entsprechende Steuerbefehle an die Flurförderzeug-Fahrsteuereinrichtungen der Flurförderzeuge übermittelt, so dass die Flurförderzeuge beim Transport der Warengüter vorbestimmte Geschwindigkeiten nicht überschreiten dürfen. Im Rahmen der Erfindung ist es ebenfalls möglich, dass die Fahrbewegungssteuerbefehle von der Steuereinrichtung der Warenlogistikeinrichtung in Echtzeit und/oder online an die Flurförderzeug-Fahrsteuereinrichtungen der Flurförderzeuge übermittelt werden. Es ist beispielweise vorgesehen, dass als Fahrbewegungssteuerbefehl eine Höchstgeschwindigkeit eines Flurförderzeugs in dem lokalen Gebiet durch die Steuereinrichtung in Echtzeit ermittelt wird und an das Flurförderzeug in Echtzeit übermittelt wird.

Im Rahmen der Erfindung ist es ebenfalls möglich, dass die individuellen Fahrbewegungssteuerbefehle und/oder die individuellen Flurförderzeugkennzeichnungen für ein Flurförderzeug unter Berücksichtigung der Anzahl der eingesetzten Flurförderzeuge im Bereich der Warenlogistikeinrichtung von der Steuereinrichtung der Warenlogistikeinrichtung erstellt werden. Werden beispielsweise wenige Fahrzeuge in der Warenlogistikeinrichtung gleichzeitig betrieben, so werden von der Steuereinrichtung der Warenlogistikeinrichtung Steuerbefehle an die eingesetzten Flurförderzeuge übermittelt, so dass diese im Vergleich zu Zeiten, in denen viele Flurförderzeuge eingesetzt werden, mit einer höheren Geschwindigkeit gefahren werden dürfen.

Außerdem ist es bei einer Ausgestaltung des Verfahrens bevorzugt, dass die individuellen Fahrbewegungssteuerbefehle und/oder die individuellen Flurförderzeugkennzeichnungen für ein Flurförderzeug unter Berücksichtigung der Verkehrsdichte von Flurförderzeugen im Bereich der Warenlogistikeinrichtung von der Steuereinrichtung der Warenlogistikeinrichtung erstellt werden.

Des Weiteren ist es bei einer Ausgestaltung vorgesehen, dass die individuellen Fahrbewegungssteuerbefehle und/oder die individuellen Flurförderzeugkennzeichnungen für ein Flurförderzeug unter Berücksichtigung von, insbesondere lokalen, Sperrungen von Förderstrecken für die Flurförderzeuge im Bereich der Warenlogistikeinrichtung mittels der Steuereinrichtung der Warenlogistikeinrichtung erstellt werden.

Ferner ist es bei dem Verfahren bevorzugt, dass die individuellen Fahrbewegungssteuerbefehle und/oder die individuellen Flurförderzeugkennzeichnungen für ein Flurförderzeug unter Berücksichtigung von Navigationsrouten für die Flurförderzeuge im Bereich der Warenlogistikeinrichtung mittels der Steuereinrichtung der Warenlogistikeinrichtung erstellt werden.

Hierbei werden beispielsweise von der Steuereinrichtung der Warenlogistikeinrichtung Navigationsrouten für einzelne Flurförderzeuge ermittelt, um beispielsweise für ein Flurförderzeug eine Route bereitzustellen, wodurch das Flurförderzeug schneller durch die Warenlogistikeinrichtung geführt wird oder das Flurförderzeug ohne irgendwelche Stopps auf dem Förderweg von einer Aufnahmestelle zu einer Abgabestelle in der Warenlogistikeinrichtung kontinuierlich gefahren wird. Dadurch ist es beispielsweise möglich, dass Gebiete, in denen ein hohes Verkehrsaufkommen von Flurförderzeugen ist, von dem Flurförderzeug umfahren werden.

Darüber hinaus wird die Aufgabe gelöst durch ein Flurförderfahrzeugsteuersystem einer Warenlogistikeinrichtung mit wenigstens zwei fahrbaren Flurförderzeugen in einem Bereich der Warenlogistikeinrichtung, wobei das Flurförderfahrzeugsteuersystem gemäß dem voranstehend beschriebenen Verfahren betreibbar ist oder betrieben wird. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und der beigefügten Zeichnung ersichtlich. Erfindungsgemäße Ausführungsformen können einzelne Merkmale oder eine Kombination mehrerer Merkmale erfüllen, solange sie in den Schutzbereich der beigefügten Ansprüche fallen.

Es zeigt:

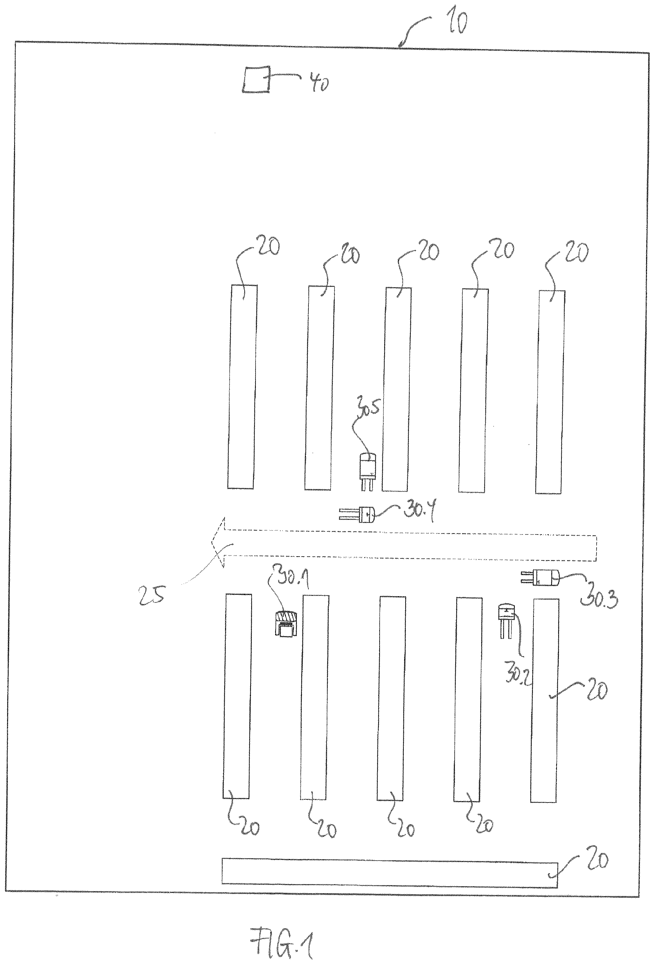

- Fig. 1: schematisch eine vereinfachte Darstellung einer Warenlogistikeinrichtung.

In Fig. 1 ist eine vereinfachte Darstellung einer Warenlogistikeinrichtung 10, beispielsweise in Ausgestaltung einer Lagerhalle oder dergleichen, gezeigt. Die Warenlogistikeinrichtung 10 umfasst beispielsweise eine Lagerhalle, in der mehrere Regale 20 nebeneinander angeordnet sind. In den Regalen 20 werden hierbei entsprechende Waren ein- oder ausgestapelt. Darüber hinaus sind in der Warenlogistikeinrichtung 10 fahrbare Flurförderzeuge 30.1, 30.2, 30.3, 30.4, 30.5 vorgesehen, so dass mittels der Flurförderzeuge 30.1 bis 30.5 die Waren zu den Regalen 20 oder von den Regalen 20 wegtransportiert werden.

Ferner umfasst die Warenlogistikeinrichtung 10 einen Zentralrechner 40, der über entsprechende Sende- und Empfangseinheiten auf drahtlose Weise mit den Flurförderzeugen 30.1 bis 30.5 in Verbindung steht. Hierbei ist der Zentralrechner 40 auf drahtlose Weise mit den bordeigenen (hier nicht dargestellten) Fahrsteuereinrichtungen verbunden. Beispielsweise sind die Fahrsteuereinrichtungen der jeweiligen Flurförderzeuge 30.1 bis 30.5 als Fahrassistenzsysteme ausgebildet und weisen entsprechende Anzeigenfelder auf, um auf optische Weise dem Bedienpersonal bzw. dem Fahrer entsprechende Informationen anzuzeigen.

Der Zentralrechner 40 ist vorzugsweise Bestandteil eines Warenmanagementsystems, mittels dem die Lagerverwaltung bzw. die Verwaltung der Waren, die eingelagert und ausgelagert werden, durchgeführt wird. Hierbei sind insbesondere neben Daten über die eingelagerten Waren auch weitere Angaben über die Waren, wie zum Beispiel die Größe, das Gewicht sowie ferner Angaben über die Fragilität etc., gespeichert. Darüber hinaus sind in dem Zentralrechner auch weitere Angaben über die eingesetzten bzw. zur Verfügung stehenden Flurförderzeuge 30.1 bis 30.5 sowie über die Personen bzw. Fahrer, die die Flurförderzeuge 30.1 bis 30.5 bedienen und fahren.

In der Warenlogistikeinrichtung 10 sind vorzugsweise mehrere Bereiche vorgesehen, in denen besondere Regelungen für die Flurförderzeuge 30.1 bis 30.5 gelten. Beispielsweise kann ein Bereich vorgesehen sein, in dem kein Flurförderzeug 30.1 bis 30.5 Waren abladen darf. In den verschiedenen Bereichen sind hierbei entsprechende Regelungen für die Flurförderzeuge 30.1 bis 30.5 zugeordnet. Beispielsweise ist zwischen den Regallagern 20 ein lokales Gebiet oder ein Bereich 25 vorgesehen, in dem nach Art einer Schnellstraße Flurförderzeuge 30.1 bis 30.5 mit einer höheren Geschwindigkeit fahren dürfen, wobei die Flurförderzeuge 30.1 bis 30.5, für die eine höhere Maximalgeschwindigkeit gilt, einen besonders eiligen Auftrag bzw. eine Warenlieferung durchführen. Hierbei wird eines der Flurförderzeuge 30.1 bis 30.5, mit dem der eilige Auftrag und die schnelle Warenlieferung durchgeführt werden soll, von dem Zentralrechner 40 mit einer höheren Priorisierung versehen und gleichzeitig werden die anderen Flurförderzeuge, die weniger wichtige oder eilige Aufträge ausführen sollen, mit einer niedrigeren Priorisierung versehen. Hierdurch wird den entsprechenden Fahrern der Flurförderzeuge 30.1 bis 30.5 mittels eines Displays auf den Flurförderzeugen 30.1 bis 30.5 angezeigt, dass das Fahrzeug mit der hohen Priorisierung mit einer höheren Geschwindigkeit durch die Warenlogistikeinrichtung 10 und auch im Bereich 25 gefahren werden darf, während die anderen Flurförderzeuge mit der niedrigeren Priorisierung durch die Übermittlung eines entsprechenden Steuerbefehls von dem Zentralrechner 40 an die entsprechenden Flurförderzeuge 30.1 bis 30.5 abgebremst werden oder nur mit einer niedrigeren Geschwindigkeit durch die Warenlogistikeinrichtung 10 sowie im Bereich 25 gefahren werden dürfen. Erfindungsgemäße Ausführungsformen können durch einzelne Merkmale oder eine Kombination mehrerer Merkmale erfüllt sein, solange sie in den Schutzbereich der beigefügten Ansprüche fallen. Im Rahmen der Erfindung sind Merkmale, die mit "insbesondere" oder "vorzugsweise" gekennzeichnet sind, als fakultative Merkmale zu verstehen.

### Bezuqszeichenliste

- 10: Warenlogistikeinrichtung
- 20: Regal
- 25: lokales Gebiet, Bereich
- 30.1 bis 30.5: Flurförderzeug
- 40: Zentralrechner

## Patentansprüche

1. Verfahren zum Steuern von wenigstens zwei fahrbaren Flurförderzeugen (30.1, 30.2, 30.3, 30.4, 30.5) in einem Bereich einer Warenlogistikeinrichtung (10), wobei die Flurförderzeuge (30.1, 30.2, 30.3, 30.4, 30.5) jeweils eine Flurförderzeug-Fahrsteuereinrichtung zum Steuern der Fahrbewegungen des jeweiligen Flurförderzeugs (30.1, 30.2, 30.3, 30.4, 30.5) aufweisen, wobei die Flurförderzeug-Fahrsteuereinrichtungen jeweils, vorzugsweise drahtlos, mit einer, insbesondere zentralen und/oder stationären, Steuervorrichtung (40) der Warenlogistikeinrichtung (10) verbunden sind oder werden, wobei von der Steuervorrichtung (40) der Warenlogistikeinrichtung (10) individuelle Fahrbewegungssteuerbefehle und individuelle Flurförderzeugkennzeichnungen an die jeweiligen Flurförderzeug-Fahrsteuereinrichtungen der Flurförderzeuge (30.1, 30.2, 30.3, 30.4, 30.5) übermittelt werden, so dass in einem lokalen Gebiet (25) des Bereichs der Warenlogistikeinrichtung (10), in dem die Flurförderzeuge (30.1, 30.2, 30.3, 30.4, 30.5) gleichzeitig bewegt, vorzugsweise gefahren, werden, die Flurförderzeuge (30.1, 30.2, 30.3, 30.4, 30.5) in Abhängigkeit der individuellen Fahrbewegungssteuerbefehle und in Abhängigkeit der individuellen Flurförderzeugkennzeichnungen auf unterschiedliche Weise bewegt, insbesondere gefahren, werden oder bewegbar, insbesondere fahrbar, sind,
**gekennzeichnet dadurch, dass**
die Flurförderzeuge (30.1, 30.2, 30.3, 30.4, 30.5) mittels der individuellen Fahrbewegungssteuerbefehle und mittels der individuellen Flurförderzeugkennzeichnungen mit unterschiedlichen Priorisierungskennzeichnungen versehen werden, so dass das mit einer höheren Priorisierungskennzeichnung versehene Flurförderzeug (30.1, 30.2, 30.3, 30.4, 30.5) gegenüber einem mit einer niedrigeren Priorisierungskennzeichnung versehene Flurförderzeug (30.1, 30.2, 30.3, 30.4, 30.5) zuerst in dem lokalen Gebiet (25) bewegt, insbesondere gefahren, wird oder bewegbar, insbesondere fahrbar, ist.

2. Verfahren nach Anspruch 1, **dadurch gekennzeichnet, dass** an einer Engstelle im lokalen Gebiet (25), in dem die Flurförderzeuge (30.1, 30.2, 30.3, 30.4, 30.5) gleichzeitig bewegt werden, das Flurförderzeug (30.1, 30.2, 30.3, 30.4, 30.5) mit einer höheren Priorisierungskennzeichnung gegenüber einem Flurförderzeug (30.1, 30.2, 30.3, 30.4, 30.5) mit einer niedrigeren Priorisierungskennzeichnung vorrangig bewegt wird oder bewegbar ist.

3. Verfahren nach Anspruch 1 oder 2, **dadurch gekennzeichnet, dass** die individuellen Fahrbewegungssteuerbefehle und/oder die individuellen Flurförderzeugkennzeichnungen mittels einer Anzeigeeinheit der Flurförderzeuge (30.1, 30.2, 30.3, 30.4, 30.5) angezeigt werden.

4. Verfahren nach einem der Ansprüche 1 bis 3, **dadurch gekennzeichnet, dass** die individuellen Fahrbewegungssteuerbefehle und/oder die individuellen Flurförderzeugkennzeichnungen nach der Übermittlung an die Flurförderzeug-Fahrsteuereinrichtungen nach einer vorbestimmten Zeitdauer gelöscht werden.

5. Verfahren nach einem der Ansprüche 1 bis 4, **dadurch gekennzeichnet, dass** ein Flurförderzeug (30.1, 30.2, 30.3, 30.4, 30.5) in Abhängigkeit eines individuellen Fahrbewegungssteuerbefehls und/oder in Abhängigkeit einer individuellen Flurförderzeugkennzeichnung während seiner Fahrt, vorzugsweise für eine vorbestimmte Zeitdauer, abgebremst wird.

6. Verfahren nach einem der Ansprüche 1 bis 5, **dadurch gekennzeichnet, dass** die individuellen Fahrbewegungssteuerbefehle und/oder die individuellen Flurförderzeugkennzeichnungen für ein Flurförderzeug (30.1, 30.2, 30.3, 30.4, 30.5) unter Berücksichtigung der Fähigkeiten eines Fahrzeugführers für das jeweilige Flurförderzeug (30.1, 30.2, 30.3, 30.4, 30.5) erstellt werden.

7. Verfahren nach einem der Ansprüche 1 bis 6, **dadurch gekennzeichnet, dass** die individuellen Fahrbewegungssteuerbefehle und/oder die individuellen Flurförderzeugkennzeichnungen für ein Flurförderzeug (30.1, 30.2, 30.3, 30.4, 30.5) unter Berücksichtigung der Dringlichkeit eines Förderauftrags und/oder unter Berücksichtigung der Einsatzzeit des Flurförderzeugs (30.1, 30.2, 30.3, 30.4, 30.5) erstellt werden.

8. Verfahren nach einem der Ansprüche 1 bis 7, **dadurch gekennzeichnet, dass** die individuellen Fahrbewegungssteuerbefehle und/oder die individuellen Flurförderzeugkennzeichnungen für ein Flurförderzeug unter Berücksichtigung der Verkehrsdichte von Flurförderzeugen (30.1, 30.2, 30.3, 30.4, 30.5) im Bereich der Warenlogistikeinrichtung (10) erstellt werden.

9. Verfahren nach einem der Ansprüche 1 bis 8, **dadurch gekennzeichnet, dass** die individuellen Fahrbewegungssteuerbefehle und/oder die individuellen Flurförderzeugkennzeichnungen für ein Flurförderzeug (30.1, 30.2, 30.3, 30.4, 30.5) unter Berücksichtigung von, insbesondere lokalen, Sperrungen von Förderstrecken für Flurförderzeuge (30.1, 30.2, 30.3, 30.4, 30.5) im Bereich der Warenlogistikeinrichtung (10) erstellt werden.

10. Verfahren nach einem der Ansprüche 1 bis 9, **dadurch gekennzeichnet, dass** die individuellen Fahrbewegungssteuerbefehle und/oder die individuellen Flurförderzeugkennzeichnungen für ein Flurförderzeug (30.1, 30.2, 30.3, 30.4, 30.5) unter Berücksichtigung von Navigationsrouten für die Flurförderzeuge (30.1, 30.2, 30.3, 30.4, 30.5) im Bereich der Warenlogistikeinrichtung (10) erstellt werden.

11. Flurförderfahrzeugsteuersystem einer Warenlogistikeinrichtung (10) mit wenigstens zwei fahrbaren Flurförderzeugen (30.1, 30.2, 30.3, 30.4, 30.5) in einem Bereich der Warenlogistikeinrichtung (10), wobei das Flurförderfahrzeugsteuersystem gemäß dem Verfahren nach einem der Ansprüche 1 bis 10 betreibbar ist oder betrieben wird.

## Claims

1. A method for controlling at least two drivable industrial trucks (30.1, 30.2, 30.3, 30.4, 30.5) in an area of a goods logistics facility (10), wherein the industrial trucks (30.1, 30.2, 30.3, 30.4, 30.5) have in each case an industrial truck drive control device for controlling the travel movements of the respective industrial truck (30.1, 30.2, 30.3, 30.4, 30.5), wherein the industrial truck drive control devices in each case are connected or will be connected, preferably by wireless means, with a, in particular central and/or stationary, control device (40) of the goods logistics facility (10), wherein individual travel movement control commands and individual industrial truck identifications are sent by the control apparatus (40) of the goods logistics facility (10) to the respective industrial truck drive control devices of the industrial trucks (30.1, 30.2, 30.3, 30.4, 30.5), so that in a local region (25) of the area of the goods logistics facility (10) in which the industrial trucks (30.1, 30.2, 30.3, 30.4, 30.5) are, preferably driven, moved simultaneously, the industrial trucks (30.1, 30.2, 30.3, 30.4, 30.5) are moved, in particular driven, in various ways or are movable, in particular drivable, in a manner dependent on the individual travel movement control commands and dependent on the individual industrial truck identifications, **characterized in that** the industrial trucks (30.1, 30.2, 30.3, 30.4, 30.5) are provided with different priority designations by means of the individual travel movement control commands and by means of the individual industrial truck identifications, so that the industrial truck (30.1, 30.2, 30.3, 30.4, 30.5) provided with a higher priority designation is moved or can be moved, in particular driven, first in the local area (25) compared to an industrial truck (30.1, 30.2, 30.3, 30.4, 30.5) provided with a lower priority designation.

2. The method according to claim 1, **characterized in that** at a narrow point in the local area (25) in which the industrial trucks (30.1, 30.2, 30.3, 30.4, 30.5) are moved simultaneously, the industrial truck (30.1, 30.2, 30.3, 30.4, 30.5) with a higher priority designation is or can be moved with priority versus an industrial truck (30.1, 30.2, 30.3, 30.4, 30.5) with a lower priority designation.

3. The method according to claim 1 or 2, **characterized in that** the individual travel movement control commands and/or the individual industrial truck identifications are displayed by means of a display unit of the industrial trucks (30.1, 30.2, 30.3, 30.4, 30.5).

4. The method according to one of the claims 1 to 3, **characterized in that** the individual travel movement control commands and/or the individual industrial truck identifications are deleted after transmission to the industrial truck drive control devices after a predetermined period of time.

5. The method according to one of the claims 1 to 4, **characterized in that** an industrial truck (30.1, 30.2, 30.3, 30.4, 30.5) is braked during its travel dependent on an individual travel movement control command and/or dependent on an individual industrial truck identification, preferably for a predetermined period of time.

6. The method according to one of the claims 1 to 5, **characterized in that** the individual travel movement control commands and/or the individual industrial truck identifications for an industrial truck (30.1, 30.2, 30.3, 30.4, 30.5) are produced taking into account the capabilities of a vehicle driver for the respective industrial truck (30.1, 30.2, 30.3, 30.4, 30.5).

7. The method according to one of the claims 1 to 6, **characterized in that** the individual travel movement control commands and/or the individual industrial truck identifications for an industrial truck (30.1, 30.2, 30.3, 30.4, 30.5) are produced taking into account the urgency of a conveyance task and/or taking into account the operation time of the industrial truck (30.1, 30.2, 30.3, 30.4, 30.5).

8. The method according to one of the claims 1 to 7, **characterized in that** the individual travel movement control commands and/or the individual industrial truck identifications for an industrial truck are produced taking into account the traffic density of industrial trucks (30.1, 30.2, 30.3, 30.4, 30.5) in the area of the goods logistics facility (10).

9. The method according to one of the claims 1 to 8, **characterized in that** the individual travel movement control commands and/or the individual industrial truck identifications for an industrial truck (30.1, 30.2, 30.3, 30.4, 30.5) are produced taking into account blockages of, in particular local, conveying paths for industrial trucks (30.1, 30.2, 30.3, 30.4, 30.5) in the area of the goods logistics facility (10).

10. The method according to one of the claims 1 to 9, **characterized in that** the individual travel movement control commands and/or the individual industrial truck identifications for an industrial truck (30.1, 30.2, 30.3, 30.4, 30.5) are produced taking into account navigation routes for the industrial trucks (30.1, 30.2, 30.3, 30.4, 30.5) in the area of the goods logistics facility (10).

11. An industrial truck control system of a goods logistics facility (10) with at least two drivable industrial trucks (30.1, 30.2, 30.3, 30.4, 30.5) in an area of the goods logistics facility (10), wherein the industrial truck control system can be or is operated according to the method of one of the claims 1 to 10.

## Revendications

1. Procédé de commande d'au moins deux chariots de manutention mobiles (30.1, 30.2, 30.3, 30.4, 30.5) dans une zone d'un dispositif (10) de logistique de marchandises, les chariots de manutention (30.1, 30.2, 30.3, 30.4, 30.5) comportant chacun un dispositif de commande de déplacement de chariot de manutention pour commander les déplacements de déplacement du chariot de manutention respectif (30.1, 30.2, 30.3, 30.4, 30.5), les dispositifs de commande de déplacement des chariots de manutention étant chacun reliés ou aptes à être reliés, de préférence sans fil, à un dispositif de commande (40), en particulier central et/ou stationnaire, du dispositif (10) de logistique de marchandises, des instructions individuelles de commande des déplacements de déplacement et des identifiants individuels des chariots de manutention étant transmises par le dispositif de commande (40) du dispositif (10) de logistique de marchandises aux dispositifs respectifs de commande de déplacement des chariots de manutention (30. 1, 30.2, 30.3, 30.4, 30.5), de sorte que, dans une zone locale (25) de la zone du dispositif (10) de logistique de marchandises, dans laquelle les chariots de manutention (30. 1, 30.2, 30.3, 30.4, 30.5) sont déplacés, de préférence conduits, simultanément, les chariots de manutention (30.1, 30.2, 30.3, 30.4, 30.5) sont déplacés, en particulier conduits, ou sont mobiles, notamment roulants, de différentes manières en fonction des instructions individuelles de commande de déplacement et en fonction des identifiants individuels des chariots de manutention, **caractérisé en ce que** les chariots de manutention (30.1, 30.2, 30.3, 30.4, 30.5) sont pourvus d'identifiants de priorité différents au moyen des instructions individuelles de commande de déplacement et au moyen des identifiants individuels de chariot de manutention, de sorte que le chariot de manutention (30.1, 30.2, 30.3, 30.4, 30.5) pourvu d'un identifiant de priorité plus élevé est déplacé en premier dans la zone locale (25) par rapport à un chariot de manutention (30.1, 30.2, 30.3, 30.4, 30.5) pourvu d'un identifiant de priorité moins élevé, en particulier est conduit, ou est mobile, en particulier est déplaçable.

2. Procédé selon la revendication 1, **caractérisé en ce que**, en un emplacement étroit de la zone locale (25) dans laquelle les chariots de manutention (30.1, 30.2, 30.3, 30.4, 30.5) sont déplacés simultanément, le chariot de manutention (30.1, 30.2, 30.3, 30.4, 30.5) avec un identifiant de priorité plus élevé est déplacé ou apte à être déplacé en priorité par rapport à un chariot de manutention (30.1, 30.2, 30.3, 30.4, 30.5) avec un identifiant de priorité moins élevé.

3. Procédé selon la revendication 1 ou la revendication 2, **caractérisé en ce que** les instructions individuelles de commande de déplacement et/ou les identifiants individuels des chariots de manutention sont affichés au moyen d'une unité d'affichage des chariots de manutention (30.1, 30.2, 30.3, 30.4, 30.5).

4. Procédé selon l'une des revendications 1 à 3, **caractérisé en ce que** les instructions individuelles de commande de déplacement et/ou les identifiants individuels des chariots de manutention sont effacés après leur transmission aux dispositifs de commande de déplacement des chariots de manutention après une durée prédéterminée.

5. Procédé selon l'une des revendications 1 à 4, **caractérisé en ce qu'**un chariot de manutention (30.1, 30.2, 30.3, 30.4, 30.5) est freiné pendant son déplacement, de préférence pendant une durée prédéterminée, en fonction d'une instruction individuelle de commande de déplacement et/ou en fonction d'un identifiant individuel de chariot de manutention.

6. Procédé selon l'une des revendications 1 à 5, **caractérisé en ce que** les instructions individuelles de commande de déplacement et/ou les identifiants individuels de chariot de manutention pour un chariot de manutention (30.1, 30.2, 30.3, 30.4, 30.5) sont établis en tenant compte des capacités d'un conducteur pour le chariot de manutention (30.1, 30.2, 30.3, 30.4, 30.5) concerné.

7. Procédé selon l'une des revendications 1 à 6, **caractérisé en ce que** les instructions individuelles de commande de déplacement et/ou les identifiants individuels de chariot de manutention sont établis pour un chariot de manutention (30.1, 30.2, 30.3, 30.4, 30.5) en tenant compte de l'urgence d'un ordre de manutention et/ou en tenant compte du temps d'utilisation du chariot de manutention (30.1, 30.2, 30.3, 30.4, 30.5).

8. Procédé selon l'une des revendications 1 à 7, **caractérisé en ce que** les instructions individuelles de commande de déplacement et/ou les identifiants individuels de chariot de manutention sont établis pour un chariot de manutention en tenant compte de la densité de circulation des chariots de manutention (30.1, 30.2, 30.3, 30.4, 30.5) dans la zone du dispositif (10) de logistique de marchandises.

9. Procédé selon l'une des revendications 1 à 8, **caractérisé en ce que** les instructions individuelles de commande de déplacement et/ou les identifiants individuels des chariots de manutention pour un chariot de manutention (30.1, 30.2, 30.3, 30.4, 30.5) sont établis en tenant compte des blocages, notamment locaux, des voies de transport pour les chariots de manutention (30.1, 30.2, 30.3, 30.4, 30.5) dans la zone du dispositif (10) de logistique de marchandises.

10. Procédé selon l'une des revendications 1 à 9, **caractérisé en ce que** les instructions individuelles de commande de déplacement et/ou les identifiants individuels de chariot de manutention pour un chariot de manutention (30.1, 30.2, 30.3, 30.4, 30.5) sont établis en tenant compte d'itinéraires de navigation pour les chariots de manutention (30.1, 30.2, 30.3, 30.4, 30.5) dans la zone du dispositif (10) de logistique de marchandises.

11. Système de commande de chariots de manutention d'un dispositif (10) de logistique de marchandises comprenant au moins deux chariots de manutention mobiles (30.1, 30.2, 30.3, 30.4, 30.5) dans une zone du dispositif (10) de logistique de marchandises, le système de commande de chariots de manutention étant apte à être exploité ou étant exploité conformément au procédé selon l'une des revendications 1 à 10.
